# EUROPEAN PATENT APPLICATION

(11) **EP 3 098 063 A1**
(43) Date of publication of application: **30.11.2016**
(21) Application number: 16171541.2
(22) Date of filing: 26.05.2016
(51) Int. Cl.: B29C 65/48, B29C 65/78, F03D 1/06

(54) **A METHOD AND TOOL FOR FORMING A SCARF JOINT**

(30) Priority: 28.05.2015 GB 201509148
(71) Applicant: Blade Dynamics Limited, Southampton, Hampshire SO16 7NS (GB)
(72) Inventor: HAYDEN, Paul, Trevor, Southampton, Hampshire SO16 7NS (GB); BROOME, Peter, Anthony, Cowes, Isle of Wight PO31 7DQ (GB)
(74) Representative: Bedford, Grant Richard

(57) **Abstract**

A method of forming a scarf joint between first and second elongate composite components 1,2, each having a complimentary tapered end surface 4,5 is disclosed. At least one of the components 1, 2 is formed of a stack of fibre layers impregnated in resin, with the tapered end surface 4 being formed by each fibre layer extending longitudinally progressively further than the adjacent layer. The method comprises applying adhesive to at least one of the tapered end surfaces 4,5, attaching a moulding tool around the first and second elongate components 1,2 with their tapered end surfaces 4,5 being adjacent to one another, applying a positive pressure increase to urge the tapered surfaces 4,5 towards one another without locally reducing the pressure below the vapour pressure of the resin or adhesive throughout the curing process, and curing the resin and adhesive in the moulding tool with the pressure applied.

## Description

The present invention relates to a method and tool for forming a scarf joint between two elongate components.

The invention has particular application to forming a scarf joint in a spar cap of a wind turbine blade. However, the idea is applicable more widely to joining any two elongate composite components.

WO2012/004571 describes a method of forming a joint in a spar cap. By forming such joints, wind turbine blades can be manufactured from a number of small components which are then built up to form a full length blade. Any such joints must be strong and reliable and should not introduce unwanted parasitic mass into the blade structure. WO2012/004571 discloses a method of joining the spar caps which allows wind turbine blades to be connected together outside of a factory environment such that the sections can be transported in sections and assembled close to their point of use. The disclosure then goes on to describe a factory based method of assembly. This required a number of U-shaped jigs which support the spar cap components during the joining process. Once it is supported, a connection piece is either built up from a number from a number of pre-preg laminates in the interface region, or is a pre-cured component which is inserted whole into the interface. At that point, the joint region is heated and cured under vacuum. WO2012/004571 does not describe the details of the application of the vacuum to the joint region. However, this is done by applying a vacuum bag which is sealed around the joint region. The space between the bag and the joint region is then evacuated in order to pressurise the joint during the curing process.

The present invention is directed to an improvement of this process.

It is vital to ensure a high quality laminate and a joint with no defects that cause stress concentrations and reduce the structural integrity. Voids are defects which alter the material properties, cause stress concentrations and act as points for crack nucleation. Voids can result from a variety of sources, for example: air may be trapped when mixing the resin or during lay-up (particularly at ply-drops); volatiles can be released during the curing process; and internal tensile stresses can build-up from resin-cure shrinkage.

To reduce the formation of voids, we have appreciated that the hydrostatic resin pressure must remain higher than the volatile vapour pressure. If not, volatiles come out of the solution and form voids. The higher temperatures during curing result in higher volatile pressure, which means pre-existing voids will grow if the void or volatile pressure exceeds the hydrostatic resin pressure. The resin hydrostatic pressure should therefore remain high enough to ensure that the air or volatile gases can be collapsed or dissolved in the liquid resin until gelation occurs.

The issue of voids is common to all composite manufacturing but there are problems which are specific to the scarf joint arrangement described earlier. The scarf surface may be a stepped surface where the angle is created by dropping off the fibre layers (or plies). At the joint interface, there may be a local resin-rich zone. Voids are prone to forming in these regions. When a vacuum bag method is used, these voids can grow in size if exposed to the vacuum because the vapour pressure exceeds the hydrostatic resin pressure. New voids can also form if dissolved gases or moisture come out of the solution. The scarf surface is critical to the structural integrity of the scarf joint and any defects in this region can significantly reduce the performance. It is vital to avoid such defects which act as stress concentrations. This is particularly important in the thin ends of the scarf joints (towards the tip of the tapered end surfaces) because the stress concentration from any defect is large with respect to the local thickness of the laminate. Therefore, stress concentrations are more detrimental in the thin ends.

In addition to the problems associated with voids when using a vacuum bag with the scarf joint arrangement, there are also practical challenges of applying a vacuum. It can be difficult to obtain a consistent and evenly distributed pressure from a vacuum and all leaks must be eliminated to maximise the compaction pressure. The vacuum bag can also pinch the edges of the laminate which hinders the evacuation of air/volatiles. The maximum pressure is also dependent on atmospheric condition which are variable, resulting in variability in laminate quality.

One way around these problems is to use an autoclave. Autoclaves apply pressure in excess of atmospheric but typically in the range of 500kPa (5 bar) to 700kPa (7 bar). This high pressure avoids the above mentioned problems with the vacuum bag. However, autoclaves are expensive and limited in size. They are particularly unsuited to the joint between two elongate components and the cost of an autoclave long enough to retain these components is extremely high.

According to the present invention, there is provided a method of forming a scarf joint according to claim 1.

The present invention provides the convenience of the vacuum bag method previously described but avoids all of the problems associated with applying consolidation pressure at a fraction of the cost of the autoclave.

Because the moulding tool is applied around the part of the components where the joint is formed, a large pressure vessel is not required. The applied consolidation pressure can exceed vacuum bag method (with are limited to a maximum equal to atmospheric pressure) and can approach pressures used in autoclaves. Furthermore, the volume which needs to be pressurised can be minimal thereby reducing the costs of pressurising a large volume and significantly decreasing the cycle time.

The step of applying a positive pressure increase preferably comprising applying a maximum pressure of less than 600kPa (6 bar), preferably less than 500kPa (5 bar) preferably less than 400kPa (4 bar) and preferably less than 300kPa (3 bar).

The step of applying pressure may be carried out by mechanical or hydraulic means. However, the step of applying pressure is preferably carried out by placing a pressure bag in the moulding tool and applying pressure to the pressure bag to pressurise the components.

In this case, a plate may be included between the pressure bag and the composite component to ensure a uniform application of pressure to the face to which the pressure is applied.

The moulding tool can be provided with a one-piece housing into which the components to be joined are inserted. However, preferably, the moulding tool comprises a two-part housing. Preferably this takes the form of a base in the shape of a channel to receive the first and second elongate components and a lid attachable to the base such that the applying pressure step takes the form of applying pressure between the lid and the elongate composite components. This means that the components forming the joint can be placed into the base which allows easy accessibility while the components are built up.

The method can be applied to forming a joint between any two elongate composite components. However, preferably, it is applied to elongate composite components which form part of a spar cap suitable for use in a wind turbine blade.

The joint may be a "double-scarf" joint. In this case, the second elongate composite element is a connection piece connected at one end to the first elongate component and connected at the opposite end to a third elongate composite component. The joint between the connection piece and the third elongate composite component is preferably formed in the same manner as the joint between the first elongate composite component and the connection piece. Indeed, it can be formed simultaneously in the same moulding tool.

According to a second aspect of the present invention, there is provided at tool according to claim 9.

This tool is suitable for carrying out the above method.

Preferably, the channel is open at both ends such that the composite element can project in both directions during the moulding process.

The means for applying positive pressure is preferable on which can apply a maximum pressure of less than 600kPa (6 bar), preferably less than 500kPa (5 bar), preferably less than 400kPa (4 bar) and preferably less than 300kPa (3 bar).

The means for applying positive pressure may be a mechanical means which can be activated manually, for example a screw-threaded press, or by an electric motor. However, preferably, the means for applying positive pressure is a pressure bag. In this case, a plate is preferably provided beneath the pressure bag in a position in which it is arranged, in use, to contact the first and second elongate composite elements. The lid preferably contains one or more ports for pressurising and venting the pressure bag. Ideally, the base is as simple as possible and all of the features necessary to conduct the moulding process are provided in the lid. This enables the elongate composite elements to be assembled in a simple channel structure and then the lid with all of the necessary connections to be brought into place. The moulding tool preferably comprises a heater in order to heat the composite element during the curing process. This heater may be provided in the lid but is preferably in the base as this provides more direct heating to the composite components.

An example of a method and moulding tool in accordance with the present invention will now be described with reference to the accompanying drawings, in which:
FIG. 1a is a first example of a joint which can be made using the method and tool of the invention;
FIG. 1b is a second example of a joint which can be made using the method and tool of the invention;
FIG. 2 is a transverse cross-section through the moulding tool; and
FIG. 3 is an elongate cross-section through the moulding tool.

The description below identifies the second two components as spar cap components and the primary intention is that these are spar cap components for use in a wind turbine blade. However, the method and tool may equally be applied to any two or more elongate composite component with complementary tapered end surfaces which are to be connected together.

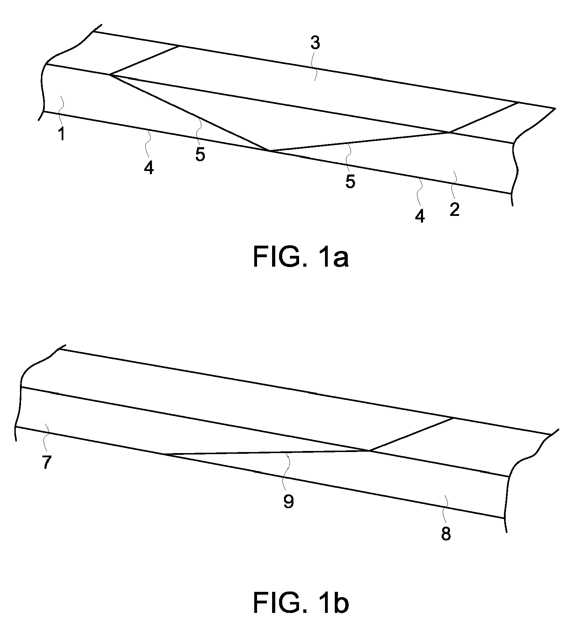

Figure 1a is a typical example of a double scarf joint formed by the present invention, while Figure 1b is a typical example of single scarf joint.

In Figure 1a, a first spar cap component 1 is joined to a second spar cap component 2 via a v-shaped connection piece 3 as described in greater detail in WO2012/004571. The spar cap components have tapered ends 4 each of which is complementary with a lower face 5 of the connection piece 3 to which it is bonded as described below. Each of the components has a composite structure and is made up of a number of fibre layers which are impregnated in resin. Each fibre layer extends progressively further in the longitudinal sense in order to create the inclined surface. This inclined surface may either be a machined surface such that it is reasonably smooth. Alternatively, it may have a stepped configuration as each of the plies which makes up a fibre layer terminate at the joint interface. The connection piece 3 may be built up of semi-curd pre-preg layers to the shape shown in Figure 1a before being cured as described below. Alternatively, the connection piece 3 may be a pre-cured component, in which case, the method of the invention is not applicable, but such a component can still be joined using the tool of the invention.

A second form of joint is shown in Figure 1b. This is a single scarf joint where there is no connection piece. Instead, there is a first spar cap component 7 with an inclined end which is joined to a second spar cap component 8 with a complementary inclined end at interface 9. The components have the same construction as described above and the comments above concerning the interface apply equally to the single interface of Figure 1b.

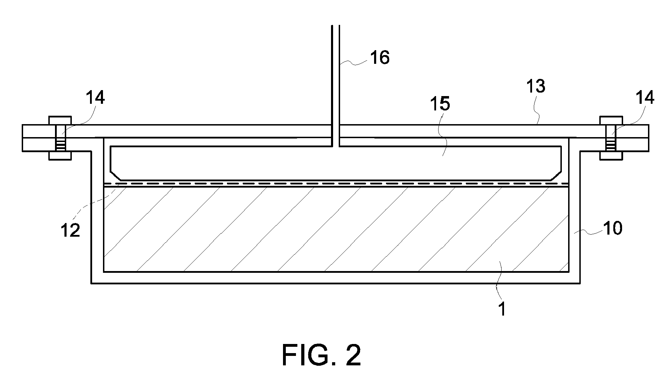

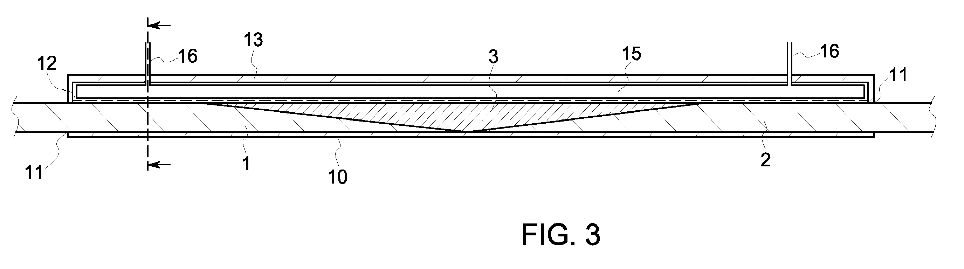

In order to create the joint, the tool shown in figures 2 and 3 is used. This comprises a base 10 having a channel shaped configuration which defines the lower and side wall of the joint component. The base 10 has openings 11 at each end from which the spar cap components 1, 2 project during the joining process, as shown in figure 3. Initially, the various components of the spar cap shown in Figures 1a or 1b will be laid up within the channel shape base 10. Once all of the components are in place, a caul plate 12 is placed on top of the components to ensure that the pressure is applied consistently to the spar cap components. A lid 13 is then bolted onto the base by a plurality of bolts 14 to firmly secure it in place. The channel in the base 10 is deeper than the spar cap components allowing space for the insertion of the pressure bag 15 immediately beneath the lid 13 and above the caul plates 12. Rather than having a planar configuration as shown in figure 2, the lid 13 may have a downwardly depending lip such that it forms a cavity to receive the pressure bag 15. In this case, the interface between the base 10 and lid 13 will be lower than as shown in Figure 2 and the bolts 14 will be located accordingly.

With the lid 13 bolted in place, the pressure bag 15 is supplied with high pressure air (up to 500kPa (5bar)) along pneumatic lines 16 of which there may be a number spaced along the length of the lid. These lines could equally be connected via the base but it is more convenient to provide them in the lid 13 to allow the base 10 to be used as a mould without the possibility of interfering with the various subsequent connections. If the connection piece 3 is a pre-cured component, the pressure is applied while the adhesive cures. On the other hand, if it is a partially cured component, a high pressure is applied while the components and the adhesive cure. In this case, a heater may be incorporated into base 10 or preferably the lid 13 to heat the spar cap components during the curing process. As an alternative to pneumatic pressure, the pressure bag 15 can be supplied with high pressure liquid along hydraulic lines 16.

As is particularly apparent from figures 2 and 3, the tooling required in order to make the joint occupies little more space than that occupied by the components to be joined themselves. It is therefore significantly smaller and cheaper than an autoclave which can contain the whole assembly. Also, as can be seen from figures 2 and 3, the volume of the pressure bag 15 is minimal given the joint size such that it is quick and cheap to pressurise. The small volume of the pressure bag minimises the stored energy in the pressurised system, particularly with respect to an autoclave.

Once the adhesive and/or spar cap components have cured, the pressure is released along the pneumatic lines 16, the bolts 14 are undone and the lid 13 and the pressure bag 15 are removed whereupon the cured spar cap component can be removed from the base 10.

## Claims

1. A method of forming a scarf joint between first and second elongate composite components (1,2), each having a complimentary tapered end surface (4,5);
at least one of the components (1,2) being formed of a stack of fibre layers impregnated in resin, the tapered end surface (4) being formed by each fibre layer extending longitudinally progressively further than the adjacent layer;
the method comprising applying adhesive to at least one of the tapered end surfaces (4,5);
attaching a moulding tool around the first and second elongate components (1,2) with their tapered end surfaces (4,5) being adjacent to one another;
applying a positive pressure increase to urge the tapered surfaces towards one another without locally reducing the pressure below the vapour pressure of the resin or adhesive throughout the curing process; and
curing the resin and adhesive in the moulding tool with the pressure applied.

2. A method according to claim 1, wherein the step of applying pressure comprises applying a maximum pressure of less than 600kPa (6 bar).

3. A method according to claim 1 or claim 2, wherein the step of applying pressure is carried out by placing a pressure bag (15) in the moulding tool and applying pressure to the pressure bag (15) to pressurise the components (1,2).

4. A method according to claim 3, further comprising including a plate (12) between the pressure bag (15) and the composite components (1,2).

5. A method according to any preceding claim, wherein the moulding tool comprises a two-part housing.

6. A method according to claim 5, wherein the tool comprises a base in the shape of a channel to receive the first and second elongate components (1,2) and a lid (13) attachable to the base (10) such that the applying pressure step takes the form of applying pressure between the lid (13) and the elongate composite components (1,2).

7. A method according to any one of the preceding claim, wherein the first and second components (1,2) form part of a spar cap suitable for use in a wind turbine blade.

8. A method according to any one of the preceding claims, wherein the joint is a double scarf joint in which the second elongate composite element (2) is a connection piece connected at one end to the first elongate component and connected at the opposite end to a third elongate composite component.

9. A moulding tool for joining first and second elongate composite elements (1,2), the tool comprising a two-part housing comprising a base (10) and a lid (13), a base defining a channel open at at least one end to allow one of the composite elements to project from the opening during the moulding process; the lid (13) being releaseably attachable to the top of the channel; the housing containing, in the region below the lid, a means for applying a positive pressure increase between the lid and the first and second elongate composite elements in the channel.

10. A tool according to claim 9, wherein the channel is open at both ends.

11. A tool according to claim 9 or claim 10, wherein the means for applying positive pressure is one which can apply a maximum pressure of less than 500kPa (5 bar).

12. A tool according to claim 11, wherein the means for applying positive pressure is one which can apply a maximum pressure of less than 300kPa (3 bar).

13. A tool according to any one of claims 9 to 12, wherein the means for applying positive pressure is a pressure bag (15).

14. A tool according to claim 13, wherein a plate (12) is provided beneath the pressure bag (15) in a position in which it is arranged, in use, to contact the first and second elongate composite elements.

15. A tool according to claim 13 or claim 14, wherein the lid (13) contains one or more ports for pressurising and venting the pressure bag (15).

16. A tool according to any one of claims 9 to 13 further comprising a heater.
